## Europäisches Patentamt
## European Patent Office
## Office européen des brevets

(19)

(11) Veröffentlichungsnummer: **0 168 798**

**B1**

(12) # EUROPÄISCHE PATENTSCHRIFT

(45) Veröffentlichungstag der Patentschrift:
**12.10.88**

(51) Int. Cl.⁴: **B 01 D 25/12**

(21) Anmeldenummer: **85108824.5**

(22) Anmeldetag: **15.07.85**

(54) Verfahren und Einrichtung zum Beschicken einer Filtervorrichtung.

(30) Priorität: **18.07.84 DE 3426523**

(43) Veröffentlichungstag der Anmeldung:
**22.01.86 Patentblatt 86/4**

(45) Bekanntmachung des Hinweises auf die Patenterteilung:
**12.10.88 Patentblatt 88/41**

(84) Benannte Vertragsstaaten:
**AT BE CH DE FR GB IT LI NL**

(56) Entgegenhaltungen:
**DE-A-2 244 917**
**DE-A-2 656 886**
**DE-A-3 004 826**
**GB-A-2 081 122**

(73) Patentinhaber: **Netzsch- Mohnopumpen GmbH, Liebigstrasse 28, D-8264 Waldkraiburg (DE)**

(72) Erfinder: **Gries, Willi, Darmstädter Strasse 6, D-6054 Rodgau 3 (DE)**

(74) Vertreter: **Wuesthoff, Franz, Dr.- Ing., Patentanwälte Wuesthoff -v. Pechmann- Behrens- Goetz Schweigerstrasse 2, D-8000 München 90 (DE)**

EP 0 168 798 B1

## Beschreibung

Die Erfindung betrifft ein Verfahren zum Beschicken einer Filtervorrichtung, insbesondere Filterpresse, mit Filtergut, bei dem der von mehreren drehzahlgeregelten Förderpumpen erzeugte Beschickungsdruck auf einen Enddruck gesteigert wird, der bis zum Ende der Filtration im wesentlichen aufrechterhalten wird, während die Beschickungsmenge je Zeiteinheit allmählich abnimmt, wobei mindestens eine Füll- und eine Hochdruckpumpe in Parallelschaltung mindestens über einen Teil der Beschickungsdauer zusammenwirken.

Bei einem bekannten derartigen Verfahren (Technische Information NM 142/01 der Netzsch-Mohnopumpen GmbH, D-8264 Waldkraiburg) wird nach Erreichen eines vorgegebenen Filtrationsdruckes die Drehzahl der Füllpumpe und somit die Beschickungsmenge schrittweise reduziert. Bei Erreichen einer vorgegebenen minimalen Drehzahl wird die Füllpumpe über einen Endschalter abgeschaltet. Nach dem Abschalten der Füllpumpe bleibt für den Rest der Beschickungsdauer nur die Hochdruckpumpe in Betrieb und steigert den Beschickungsdruck auf den Enddruck. Es findet keine aufeinander abgestimmte Ausnutzung der Leistungen der beiden parallel geschalteten Pumpen statt, was zu einer langen Beschickungsdauer und damit hohen Betriebskosten führt.

Es ist weiter ein Verfahren zum Beschicken einer Filtervorrichtung mit einer Förderpumpe bekannt (EP-A-0 027 910), bei dem die Beschickung in wiederholten Preßzyklen vorgenommen wird, in deren Verlauf die Förderpumpe arbeitet, die nach Erreichen eines vorgegebenen Grenzwertes für den Druck in der jeweiligen Beschickungsphase stillgesetzt wird, bis der Beschickungsdruck wieder auf einen unteren Grenzwert abgesunken ist. Dabei führt jedoch das An- und Abschalten der Förderpumpe zu einem unwirtschaftlichen Betriebsverhalten.

Der Erfindung liegt die Aufgabe zugrunde, eine Filtervorrichtung, insbesondere Filterpresse, derart zu beschicken, daß die Beschickungsdauer möglichst gering ist und Förderpumpen in wirtschaftlicher Weise eingesetzt werden.

Die Aufgabe ist erfindungsgemäß dadurch gelöst, daß
- die allmähliche Abnahme der Beschickungsmenge je Zeiteinheit zunächst durch eine Absenkung der Drehzahl der Füllpumpe auf eine vorgegebene untere Drehzahl bei gleichbleibender Drehzahl der Hochdruckpumpe bewirkt wird,
- nach Erreichen der unteren Drehzahl der Füllpumpe zur weiteren Abnahme der Beschickungsmenge die Drehzahl der Hochdruckpumpe abgesenkt wird,
- im Falle einer vorübergehenden Zunahme des Schluckvermögens zunächst die Drehzahl der Hochdruckpumpe wieder bis höchstens auf ihren vorherigen Wert angehoben wird und erforderlichenfalls im Anschluß daran die Beschickungsmenge über eine Erhöhung der Drehzahl der Füllpumpe weiter erhöht wird, und
- die Füllpumpe dann abgeschaltet wird, wenn das Schluckvermögen soweit abgenommen hat, daß die Hochdruckpumpe zum Beschicken der Filterpresse ausreicht, ohne daß ihre Drehzahl einen vorgebbaren Wert überschreitet.

Daraus, daß erfindungsgemäß die allmähliche Abnahme der Beschickungsmenge je Zeiteinheit zunächst durch eine Absenkung der Drehzahl der Füllpumpe auf eine vorgegebene untere Drehzahl bei gleichbleibender Drehzahl der Hochdruckpumpe bewirkt wird, folgt, daß die Hochdruckpumpe während des Beginns des Beschickens mit gleichbleibender Drehzahl betrieben werden und somit für diesen Bereich mit optimalem Wirkungsgrad ausgelegt werden kann. Die Regelung der während des Beginns der Beschickung relativ großen Beschickungsmenge je Zeiteinheit durch eine Absenkung der Drehzahl der Füllpumpe hat weiterhin ein schnelles Regelverhalten zur Folge, wodurch sich die Steigerung des Beschickungsdruckes in genau vorgebbarer Weise erzielen läßt.

Dadurch, daß erfindungsgemäß nach Erreichen der unteren Drehzahl der Füllpumpe zur weiteren Abnahme der Beschickungsmenge die Drehzahl der Hochdruckpumpe abgesenkt wird, wird erreicht, daß die Füllpumpe nur innerhalb desjenigen Drehzahlbereiches betrieben wird, in dem sie wirtschaftlich arbeitet. Bei der Verwendung einer Exzenterschneckenpumpe als Füllpumpe wird dadurch auch ein bei zu geringen Drehzahlen auftretender unnötiger Verschleiß von deren Rotor und Stator vermieden.

Dadurch, daß erfindungsgemäß im Falle einer vorübergehenden Zunahme des Schluckvermögens zunächst die Drehzahl der Hochdruckpumpe wieder auf ihren vorherigen Wert angehoben wird und erforderlichenfalls im Anschluß daran die Beschickungsmenge über eine Erhöhung der Drehzahl der Füllpumpe gesteigert wird, ergibt sich für diesen Teil der Beschickungsdauer eine genaue und wirtschaftliche Regelung der Beschickungsmenge. Die Förderkapazität der Füllpumpe wird weiterhin ausgenützt und ist jederzeit steigerbar, jedoch wird zum Zwecke einer schnell ansprechenden Regelung zunächst die Beschickungsmenge nur über die Drehzahl der Hochdruckpumpe erhöht.

Dadurch, daß erfindungsgemäß die Füllpumpe dann abgeschaltet wird, wenn das Schluckvermögen soweit abgenommen hat, daß die Hochdruckpumpe zum Beschicken der Filterpresse ausreicht, ohne daß ihre Drehzahl einen vorgegebenen Wert überschreitet, bleibt die Füllpumpe solange eingeschaltet, bis die Beschickungsmenge ausschließlich über Änderungen der Drehzahl der Hochdruckpumpe geregelt werden kann. Zwei oder mehr Füll- und Hochdruckpumpen werden erfindungsgemäß solange parallel betrieben, wie es aufgrund des Schluckvermögens zum Zwecke einer wirtschaftlichen Filterung mit geringer Beschickungsdauer erforderlich ist.

Die erfindungsgemäße Regelung der durch die Förderpumpen erbrachten Beschickungsmenge über eine Drehzahlregelung ermöglicht es, den Beschickungsdruck auf einen Enddruck so zu steigern, daß der Beschickungsdruck auch ohne die Zwischenschaltung von Druckbehältern nicht zeitweilig abfallen kann.

Bei einem bevorzugten Ausführungsbeispiel wird eine von der Beschickungsmenge je Zeiteinheit abhängige Beimengung von Flockungsmitteln über Meßwerte der Drehzahlen der Förderpumpen gesteuert. Dadurch wird ein Über- bzw. Unterdosieren vermieden, weil die Flockungsmittel in Abhängigkeit von der Trockensubstanz des zur Fest/Flüssigtrennung anstehenden Filtergutes zugegeben werden.

Bei einem weiteren bevorzugten Ausführungsbeispiel wird der Enddruck in mehrere vorgegebene Zeitintervalle eines vorgegebenen konstanten Drucks aufweisenden Druckstufen erreicht. Es wird dadurch eine zu schnelle Verdichtung der sich aufbauenden Kuchenschicht an den Filtertüchern verhindert und somit durch eine bessere Porosität des Filterkuchens eine höhere Entwässerungsleistung erzielt.

Zur Durchführung des erfindungsgemäßen Verfahrens eignet sich besonders eine Einrichtung mit mehreren parallelen Exzenterschneckenpumpen mit Drehzahlregeleinrichtungen, die z. B. als mechanische Regeleinrichtungen oder Frequenzsteueranlagen für Drehstromantriebsmotoren ausgebildet sein können. Eine derartige Einrichtung ist erfindungsgemäß dadurch weitergebildet, daß Anordnungen zum induktiven Messen der Drehzahlen und zum Messen des Beschickungsdruckes vorhanden sind, sowie eine Mikroprozessoreinheit mit frei eingebbaren Führungsgrößen für die allmähliche Steigerung des Beschickungsdruckes mit Zeitintervallen konstanten Druckes, wobei die Mikroprozessoreinheit eingangsseitig über elektrische Steuerleitungen mit den Anordnungen zum Messen des Beschickungsdrucks und der Pumpendrehzahlen und ausgangsseitig über elektrische Steuerleitungen zur Beeinflussung der Pumpendrehzahlen verbunden ist.

Durch die erfindungsgemäße Verwendung einer Mikroprozessoreinheit mit frei eingebbaren Führungsgrößen für die allmähliche Steigerung des Beschickungsdruckes ist die Beschickung in Abhängigkeit von den Eigenschaften der Filtervorrichtung, der Förderpumpen und des Fördergutes in einfacher Weise vorgebbar.

Dadurch, daß bei einer Weiterbildung der erfindungsgemäßen Einrichtung zur Überwachung des Druckes ein Membrandruckschalter angeordnet ist, ist eine von der Abtastung des Beschickungsdruckes für die Mikroprozessoreinheit unabhängige Drucküberwachung gegeben.

Bei einer vorteilhaften Ausführungsform der erfindungsgemäßen Einrichtung ist in den Mikroprozessor eine Zähleinheit für abgeschlossene Filterzyklen ausgebildet.

Die Erfindung wird im folgenden anhand schematischer Diagramme erläutert. Es zeigt:
Fig. 1 ein Flußdiagramm einer erfindungsgemäßen Einrichtung;
Fig. 2 den Verlauf der Drehzahl der Füllpumpe über der Beschickungszeit;
Fig. 3 den Verlauf der Drehzahl der Hochdruckpumpe über der Beschickungszeit;
Fig. 4 den Verlauf des Filtrationsdruckes über der Beschickungszeit.

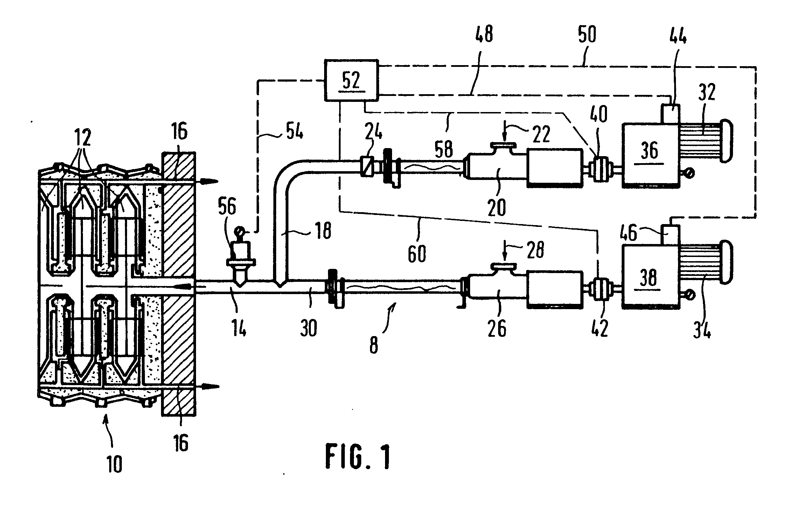

Das in Fig. 1 dargestellte Flußdiagramm zeigt eine Einrichtung 8 zum Beschicken einer unvollständig dargestellten Filterpresse 10 mit Filterkammern 12, die durch Filtertücher, an denen sich während des Filterns ein Filterkuchen absetzt, ausgekleidet sind. Die Filterpresse 10 wird über eine Zuführleitung 14 in der angegebenen Pfeilrichtung mit Filtergut beschickt. Das Filtrat kann über Ablaufleitungen 16 von den Filterkammern 12 abfließen.

Die Zuführleitung 14 ist über einen Leitungszweig 18 an eine Füllpumpe 20 angeschlossen, die das Filtergut über einen Einlaß 22 in der dort angegebenen Pfeilrichtung aufnimmt. Die Füllpumpe 20 ist als Exzenterschneckenpumpe ausgebildet und fördert das Filtergut durch eine Rückschlagklappe 24 über den Leitungszweig 18 in die Zuführleitung 14 der Filterpresse 10. Der Füllpumpe 20 parallelgeschaltet ist eine ebenfalls als Exzenterschneckenpumpe ausgebildete Hochdruckpumpe 26, die das Filtergut über einen Einlaß 28 in Richtung des dort angegebenen Pfeiles aufnimmt. Die Hochdruckpumpe 26 führt das Filtergut über einen Leitungszweig 30, der sich mit dem Leitungszweig 18 vereinigt, in die Zuführleitung 14 der Filterpresse. Der Antrieb der beiden Exzenterschneckenpumpen 20, 26 erfolgt über Antriebsmotore 32, 34 und mechanische Regelgetriebe 36, 38, deren Abtriebswellen über Kupplungen 40, 42 mit den Antriebswellen der Exzenterschneckenpumpen 20, 26 verbunden sind.

Die mechanischen Regelgetriebe 36, 38 sind über Servomotore 44, 46 betätigbar. Die Servomotore 44, 46 empfangen über Steuerleitungen 48, 50 Steuersignale von einer Regeleinheit 52, die eine Mikroprozessoreinheit aufweist, in die die für die Regelung der Beschickung erforderlichen Werte frei eingebbar sind. Über eine Eingangsleitung 54 sind elektrische Signale für durch einen Druckumsetzer 56 abtastbare Werte für den Beschickungsdruck in der Zuführleitung 14 in die Regeleinheit 52 eingebbar.

Elektrische Signale der über nicht dargestellte induktive Drehzahlmeßeinrichtungen an den Kupplungen 40, 42 ermittelten Pumpendrehzahlen $n_F$, $n_H$ werden über Steuerleitungen 58, 60 der Mikroprozessoreinheit zugeführt.

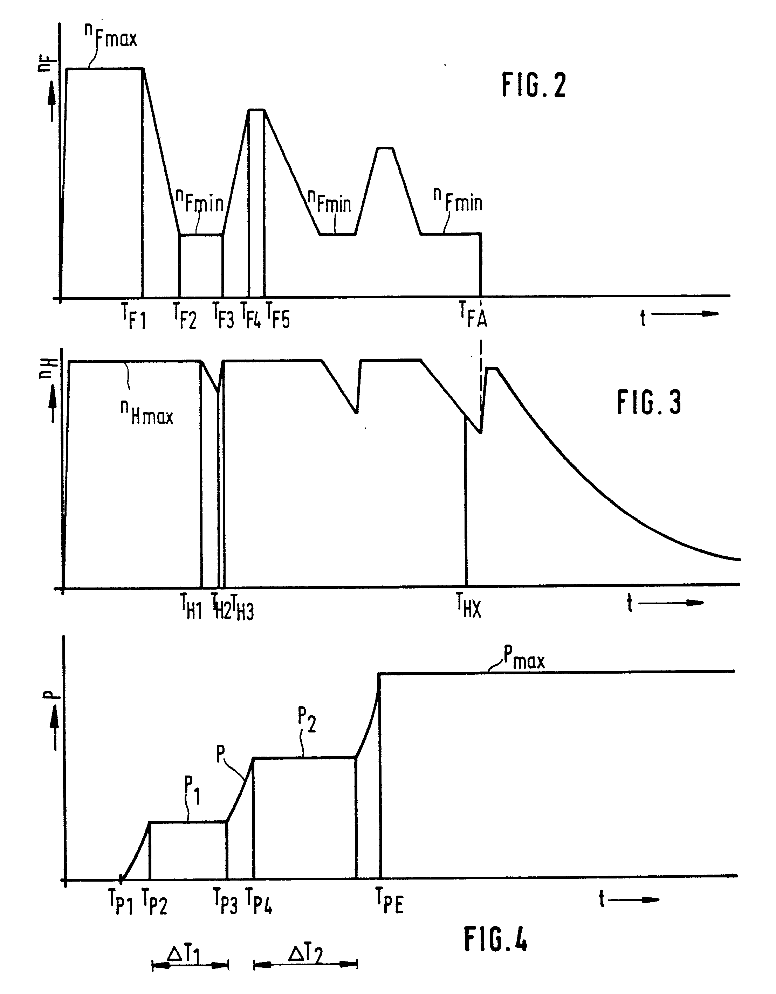

Zu Beginn der Beschickung der Filterpresse 10 wird, wie in den Fig. 2 und 3 dargestellt, die Drehzahl der Füllpumpe 20 auf einen Wert $n_{Fmax}$ hochgefahren und die Drehzahl der Hochdruckpumpe 26 auf einen Wert $n_{Hmax}$. Wie in Fig. 4 angegeben, erfolgt die Beschickung mit Filtergut zunächst ohne Druck. Vom Zeitpunkt $T_{p1}$ an erfolgt ein allmählicher Aufbau des Beschickungsdruckes bis zu einem vorgegebenen Wert $P_1$ der in Abhängigkeit von der Beschaffenheit des Filtergutes und des sich daraus ergebenden Aufbaus des Filterkuchens zu einem Zeitpunkt $T_{p2}$ erreicht wird.

Um einen lockeren porösen filtratdurchlässigen Aufbau des Filterkuchens zu erreichen, darf der sich aufbauende Filtrationsdruck, der dem Beschickungsdruck in der Zuführleitung 14 entspricht, nicht willkürlich ansteigen. Ein für die Eigenschaften der vorgegebenen Filterpresse 10 und des vorgegebenen Filtergutes zum Zwecke einer kurzen Beschickungsdauer optimaler Druckanstieg läßt sich zunächst durch eine Minderung der Drehzahl $n_F$ der Füllpumpe 20 erreichen. In dem vorliegenden Beispiel wird davon ausgegangen, daß der Aufbau des Filterkuchens nach Erreichen des Druckes $P_1$ soweit fortgeschritten ist, daß ein weiterer Aufbau, bedingt durch einen weiteren Druckanstieg, zu einer unnötigen Minderung des Schluckvermögens der Filterpresse 10 und damit zu einer Erhöhung der Beschickungsdauer führen würde. Es wird deshalb vom Zeitpunkt $T_{F1}$ an, der im wesentlichen mit dem Zeitpunkt $T_{p2}$ übereinstimmt, die Drehzahl $n_F$ der Füllpumpe 20 bis zum Zeitpunkt $T_{F2}$ von ihrem Wert $n_{Fmax}$ auf ihren Wert $n_{Fmin}$ herabgeregelt. Der Wert $n_{Fmin}$ ist dabei in Abhängigkeit von der Ausführung der als Füllpumpe 20 arbeitenden Exzenterschneckenpumpe so festgelegt, daß mit dieser Drehzahl noch ein wirtschaftlicher Betrieb möglich ist und diese Drehzahl noch hoch genug ist, damit kein unnötiger Verschleiß, bedingt durch einen zu hohen axialen Schlupf, zwischen einem Rotor und Stator der Füllpumpe 20 auftreten kann.

Reicht, wie in dem Ausführungsbeispiel dargestellt, die Minderung der Füllpumpendrehzahl auf einen Wert $n_{Fmin}$ nicht aus, um einen für den Aufbau eines gleichmäßigen Filterkuchens entlang der Filtertücher notwendigen konstanten Druck $P_1$ in dem vorgegebenen Zeitintervall $T_1$ zwischen den Zeitpunkten $T_{p2}$ und $T_{p3}$ einzuhalten, dann wird zusätzlich die Drehzahl $n_H$ der Hochdruckpumpe 26 vermindert, wie dies gemäß Fig. 3 zwischen den Zeiten $T_{H1}$ und $T_{H2}$ der Fall ist.

Ein zum Zwecke der Minimierung der Beschickungsdauer erforderlicher Druckanstieg ab dem Zeitpunkt $T_{p3}$ erfolgt zunächst dadurch, daß ab dem Zeitpunkt $T_{H2}$, der dem Zeitpunkt $T_{p3}$ entspricht, die Drehzahl der Hochdruckpumpe 26 wieder auf ihren Wert $n_{Hmax}$ geregelt wird. Dies ist zum Zeitpunkt $T_{H3}$, der mit dem Zeitpunkt $T_{F3}$ übereinstimmt, erreicht. Ab diesem Zeitpunkt wird, wie in Fig. 2 dargestellt, die Drehzahl der Füllpumpe 20 auf einen Wert hochgefahren, der im allgemeinen kleiner ist als der Wert $n_{Fmax}$, und bei dem, wie in Fig. 4 gezeigt, bei einem Zeitpunkt $T_{p4}$ ein Druck erreicht ist, an dem sich wiederum ein vorgegebenes Zeitintervall $T_2$ eines vorgegebenen konstanten Druckes $P_2$ anschließt. Der beschriebene Vorgang wird solange wiederholt, bis, wie in Fig. 4 dargestellt, zu einem Zeitpunkt $T_{PE}$ ein Druck $P_{max}$ erreicht ist, der für den Rest der Beschickungszeit konstant gehalten wird.

Das Ansteigen des Filtrations- bzw. Beschickungsdruckes ergibt sich ebenso wie die Abnahme des Schluckvermögens durch den Aufbau des Filterkuchens mit anwachsender Dicke an den Filtertüchern. Wie das den Fig. 2 und 3 zu entnehmen ist, vermindert sich die zu den Pumpendrehzahlen proportionale Beschickungsmenge mit steigendem Beschickungsdruck infolge der Zunahme des Filterkuchens und der dadurch bedingten Abnahme des Schluckvermögens. Zu einem Zeitpunkt $T_{FA}$ wird die Füllpumpe 20 gänzlich abgeschaltet, weil, wie in Fig. 3 dargestellt, zu einem vor dem Zeitpunkt $T_{FA}$ liegenden Zeitpunkt $T_{HX}$ zur Regelung der Beschickungsmenge die Hochdruckpumpe 26 ausreicht und ab dem Zeitpunkt $T_{HX}$ ständig unterhalb ihrer maximalen Drehzahl $n_{Hmax}$ betrieben wird.

Der Übersichtlichkeit halber ist in den Fig. 2 bis 4 ein allmähliches Ansteigen des Beschickungsdruckes P in drei Druckstufen dargestellt. Mit der Regeleinheit 52 ist es möglich, über frei eingebbare Führungsgrößen für den Druck $P_1$, $P_2$, $P_{max}$ das allmähliche Ansteigen des Druckes auf einen Wert $P_{max}$ in maximal 10 Druckstufen mit vorgegebenen Zeitintervallen konstanten Druckes zu erreichen. Der Mikroprozessoreinheit der Regeleinheit 52 werden als Eingangsgrößen für die Steuerung über eine Eingangsleitung 54 von einem Druckumsetzer 56 elektrische Signale für in Zeitintervallen abgetastete Werte des Beschickungsdruckes P zugeführt. Ein Vergleich dieser Eingangsgrößen mit vorgebbaren Sollgrößen $P_1$, $P_2$, $P_{max}$ wird in der Mikroprozessoreinheit vorgenommen und im Falle des Auftretens von Abweichungen, die eine bestimmte vorgebbare Toleranzbreite überschreiten, wird über die Steuerleitung 48 oder 50 ein elektrisches Ausgangssignal an den Servomotor 44 oder 46 übertragen. Über die mechanischen Regeleinrichtungen 36, 38 wird die vorgegebene Drehzahländerung für die Füllpumpe 20 und/oder die Hochdruckpumpe 26 vorgenommen.

Bei der Drehzahlregelung von Drehstromantriebsmotoren werden diesen über die Steuerleitungen 48, 50 entsprechende elektrische Ausgangssignale der Mikroprozessoreinheit zugeführt.

Über eine nicht dargestellte, an den Kupplungen 40, 42 wirkende induktive Meßeinrichtung ist die Drehzahl der Füllpumpe 20 und der Hochdruckpumpe 26 meßbar. Die Meßwerte für die Drehzahlen $n_F$ und $n_H$ werden über Steuerleitungen 58, 60 und somit in die Mikroprozessoreinheit übertragen, mittels der über das Verdrängungsvolumen der beiden Pumpen 20, 26 die jeweilige Beschickungsmenge ermittelbar ist. Damit ist es möglich, Flockungsmittel dem Filtergut in Abhängigkeit von der Beschickungsmenge je Zeiteinheit beizumengen, so daß sich zum Zwecke einer Minimierung der Beschickungsdauer ein gleichmäßiger und poröser Filterkuchen ausbildet.

Durch einen nicht eingezeichneten Membrandruckschalter wird der Druck sicherheitshalber unabhängig von den durch den Druckumsetzer 56 ermittelten Werten überwacht.

Die Mikroprozessoreinheit der Regeleinheit 52 kann eine Zähleinheit für abgeschlossene Filterzyklen aufweisen, und in bekannter Weise sind die für einen Dreipunktregler mit variablem, einstellbarem Regelverhalten erforderlichen Werte für die Führungsgröße, eine Toleranzbreite bzw. Totzone und eine Verstellgeschwindigkeit eingebbar.

## Patentansprüche

1. Verfahren zum Beschicken einer Filtervorrichtung, insbesondere Filterpresse, mit Filtergut,
- bei dem der von mehreren drehzahlgeregelten Förderpumpen erzeugte Beschickungsdruck auf einen Enddruck gesteigert wird, der bis zum Ende der Filtration im wesentlichen aufrechterhalten wird, während die Beschickungsmenge je Zeiteinheit allmählich abnimmt, wobei
- mindestens eine Füll- und eine Hochdruckpumpe in Parallelschaltung mindestens über einen Teil der Beschickungsdauer zusammenwirken,
dadurch gekennzeichnet,
- daß die allmähliche Abnahme der Beschickungsmenge je Zeiteinheit zunächst durch eine Absenkung der Betriebsdrehzahl ($n_{Fmax}$) der Füllpumpe (20) auf eine vorgegebene untere Betriebsdrehzahl ($n_{Fmin}$) bei gleichbleibender Drehzahl ($n_{Hmax}$) der Hochdruckpumpe (26) bewirkt wird,
- daß nach Erreichen der unteren Drehzahl ($n_{Fmin}$) der Füllpumpe (20) zur weiteren Abnahme der Beschickungsmenge die Drehzahl ($n_H$) der Hochdruckpumpe (26) abgesenkt wird,
- daß im Falle einer vorübergehenden Zunahme des Schluckvermögens zunächst die Drehzahl ($n_H$) der Hochdruckpumpe (26) wieder bis höchstens auf ihren vorherigen Wert ($n_{max}$) angehoben wird und erforderlichenfalls im Anschluß daran die Beschickungsmenge über eine Erhöhung der Drehzahl ($n_F$) der Füllpumpe (20) weiter erhöht wird, und
- daß die Füllpumpe (20) dann abgeschaltet wird, wenn das Schluckvermögen soweit abgenommen hat, daß die Hochdruckpumpe (26) zum Beschicken der Filterpresse (10) ausreicht, ohne daß ihre Drehzahl ($n_H$) einen vorgebbaren Wert ($n_{Hmax}$) überschreitet.

2. Verfahren zum Beschicken einer Filtervorrichtung nach Anspruch 1, dadurch gekennzeichnet, daß eine von der Beschickungsmenge je Zeiteinheit abhängige Beimengung von Flockungsmitteln über die jeweiligen Werte der Drehzahlen ($n_F$, $n_H$) der Förderpumpen (20, 26) gesteuert wird.

3. Verfahren nach Anspruch 1 oder 2, dadurch gekennzeichnet, daß der Enddruck ($P_{max}$) in mehrere vorgebbare Zeitintervalle ($T_1$, $T_2$) eines vorgebbaren konstanten Druckes ($P_1$, $P_2$) aufweisenden Druckstufen erreicht wird.

4. Vorrichtung zum Durchführen des Verfahrens nach einem der Ansprüche 1 bis 3, mit mehreren parallel geschalteten Exzenterschneckenpumpen (20, 26) mit Drehzahlregeleinrichtungen (36, 38), dadurch gekennzeichnet,
- daß Anordnungen zum induktiven Messen der Pumpendrehzahlen ($n_F$, $n_H$) und zum Messen des Beschickungsdruckes (P) vorhanden sind,
- daß in einer Regeleinrichtung (52) eine Mikroprozessoreinheit mit frei eingebbaren Führungsgrößen ($P_1$, $P_2$, $P_{max}$' $T_1$, $T_2$) für die allmähliche Steigerung des Beschickungsdruckes (P) vorhanden ist mit Zeitintervallen ($T_1$, $T_2$) konstanten Druckes ($P_1$, $P_2$)'
- daß die Mikroprozessoreinheit eingangsseitig über elektrische Steuerleitungen mit den Anordnungen zum Messen des Beschickungsdruckes (P) und der Pumpendrehzahlen ($n_F$, $n_H$) und ausgangsseitig über elektrische Steuerleitungen (36, 38) zur Beeinflußung der Pumpendrehzahlen ($n_F$, $n_H$) verbunden ist.

5 Vorrichtung nach Anspruch 4, dadurch gekennzeichnet, daß zur Überwachung des Druckes (P) zusätzlich ein Membrandruckschalter angeordnet ist.

6. Vorrichtung nach Anspruch 4 oder 5, dadurch gekennzeichnet, daß in der Mikroprozessoreinheit eine Zähleinheit für abgeschlossene Filterzyklen vorhanden ist.

## Claims

1. A method of charging material to be filtered into a filtering apparatus, especially into a filter press, wherein
- the charging pressure generated by a plurality of rotational speed-controlled feed pumps is increased to reach a final pressure which is substantially maintained until the end of the filtration, whereas the quantity being charged per unit time decreases gradually,
- at least one filling pump and one high-pressure pump which are connected in parallel cooperate with each other at least for part of the charging time,
    characterized in that
    - the gradual decrease of the quantity being charged per unit time is initially caused by reducing the working rotational speed ($n_{Fmax}$) of the filling pump (20) to a given lower working rotational speed ($n_{Fmin}$) while the rotational speed ($n_{Hmax}$) of the high-pressure pump (26) is kept constant,
    - upon reaching the lower rotational speed ($n_{Fmin}$) of the filling pump (20), the rotational speed ($n_H$) of the high-pressure pump (26) is reduced in order to further reduce the quantity being charged,
    - in case of a temporary increase of the absorption capacity, first the rotational speed ($n_H$) of the hihg-pressure pump (26) is again raised to its former value ($n_{max}$), at most, and that subsequently, if required, the quantity being charged is further increased by increasing the rotational speed ($n_F$) of the filling pump (20), and
    - the filling pump (20) is turned off when the absorption capacity has decreased so far that the high-pressure pump (26) is sufficient for charging the filter press (10) without its rotational speed ($n_H$) exceeding a presettable value ($n_{Hmax}$).
    2. The method of charging a filtering apparatus of claim 1,
    characterized in that
    an admixture of flocculation agents corresponding to the quantity being charged per unit time is controlled through the respective values of the rotational speeds ($n_F$, $n_H$) of the feed pumps (20, 26).
    3. The method of claim 1 or 2,
    characterized in that
    the final pressure ($P_{max}$) is reached in pressure steps comprising a plurality of presettable time intervals ($\Delta T_1$, $\Delta T_2$) of a presettable constant pressure ($P_1$, $P_2$).
    4. An apparatus for carrying out the method as claimed in any of claims 1 to 3, comprising a plurality of eccentric worm pumps (20, 26) connected in parallel and provided with rotational speed control means (36, 38),
    characterized in that
    - assemblies are provided for the inductive measuring of the rotational pump speeds ($n_F$, $n_H$) and for measuring the charging pressure (P),
    - in a control means (52) a microprocessor unit is provided which is adapted to receive freely enterable command variables ($P_1$, $P_2$, $P_{max}$, $\Delta T_1$, $\Delta T_2$) for the gradual increase of the charging pressure (P) in time intervals ($\Delta T_1$, $\Delta T_2$) of constant pressure ($P_1$, $P_2$),
    - the inputs of the microprocessor unit are connected through electric control lines to the assemblies for measuring the charging pressure (P) and the rotational pump speeds ($n_F$, $n_H$), and the outputs thereof are connected through electric control lines (36, 38) such as to influence the rotational pump speeds ($n_F$, $n_H$).
    5. The apparatus of claim 4,

characterized in that
an additional diaphragm-type pressure switch is provided for monitoring the pressure (P).
    6. The apparatus of claim 4 or 5,
    characterized in that
    a counting unit for counting the completed filtering cycles is included in the microprocessor unit.


**Revendications**

    1. Procédé d'alimentation en matières à filtrer d'un appareil de filtration, plus particulièrement d'un filtre-presse,
    - dans lequel la pression de chargement, générée par un nombre de pompes d'alimentation à réglage de vitesse, est augmentée jusqu'à une pression finale qui est sensiblement maintenue jusqu'à la fin de la filtration, alors que la quantité à charger par unité de temps se réduit graduellement,
    - une pompe de chargement et une pompe haute-pression, au moins, qui sont connectées en parallèle, coopérant l'une avec l'autre au moins pour une partie de la durée de chargement,
    caractérisé en ce que
    - la réduction graduelle de la quantité à charger par unité de temps est, au début, provoquée par une réduction de la vitesse de rotation de régime ($n_{Fmax}$) de la pompe de chargement (20) à une vitesse de rotation inférieure donnée ($n_{Fmin}$), tout en maintenant constante la vitesse de rotation ($n_{Hmax}$) de la pompe haute-pression (26);
    - que, après obtention de la vitesse de rotation inférieure ($n_{Fmin}$) de la pompe de chargement (20), la vitesse de rotation ($n_H$) de la pompe haute-pression (26) est réduite afin de réduire davantage la quantité à charger;
    - que, dans le cas d'une augmentation temporaire de la capacité d'absorption, d'abord la vitesse de rotation ($n_H$) de la pompe haute-pression (26) est de nouveau portée à sa valeur précédente ($n_{max}$), au maximum, et à la suite, si nécessaire, la quantité à charger est augmentée davantage moyennant une augmentation de la vitesse de rotation ($n_F$) de la pompe de chargement (20); et
    - que la pompe de chargement (20) est arrêtée au moment où la capacité d'absorption se sera abaissée à tel degré que la pompe haute-pression (26) suffit pour charger le filtre-presse (10) sans que sa vitesse de rotation ($n_H$) ne dépasse une valeur prédéterminable ($n_{Hmax}$)
    2. Procédé d'alimentation d'un appareil de filtration selon la revendication 1,
    caractérisé en ce que
    l'addition de floculants en fonction de la quantité à charger par unité de temps est contrôlée par l'intermédiaire des valeurs respectives des vitesses de rotation ($n_F$, $n_H$) des pompes d'alimentation (20, 26).
    3. Procédé selon la revendication 1 ou 2,
    caractérisé en ce que

l'on arrive à la pression finale ($P_{max}$) par paliers de pression comportant plusieurs intervalles de temps ($\Delta T_1$, $\Delta T_2$) prédéterminables d'une pression constante ($P_1$, $P_2$) prédéterminable.

4. Appareil destiné à la mise en oeuvre du procédé selon l'une quelconque des revendications 1 à 3, ledit appareil comprenant plusieurs pompes à vis excentriques (20, 26) travaillant en parallèle et comportant des dispositifs de réglage de la vitesse de rotation (36, 38),

caractérisé en ce que

- il existe des ensembles destinés à la mesure inductive des vitesses de rotation ($n_F$, $n_H$) et à la mesure de la pression de chargement (P);

- qu'il existe, dans un dispositif de réglage (52), une unité de microprocesseur qui accepte des grandeurs de commande pouvant être entrées librement ($P_1$, $P_2$, $P_{max}$, $\Delta T_1$, $\Delta T_2$) pour l'augmentation graduelle de la pression de chargement (P) dans des intervalles de temps ($\Delta T_1$, $\Delta T_2$) de pression constante ($P_1$, $P_2$);

- que l'unité de microprocesseur a ses entrées connectées par des lignes de commande électriques aux ensembles de mesure de la pression de chargement (P) et des vitesses de rotation des pompes ($n_F$, $n_H$) et ses sorties connectées par des lignes de commande électriques de manière à pouvoir influencer les vitesses de rotation des pompes ($n_F$, $n_H$).

5. Appareil selon la revendication 4,

caractérisé par

l'installation additionnelle d'un interrupteur manométrique à membrane pour la surveillance de la pression (P).

6. Appareil selon la revendication 4 ou 5,

caractérisé en ce que

l'unité de microprocesseur comporte une unité de comptage des cycles de filtration effectués.

FIG. 1

FIG.2

FIG.3

FIG.4

3